# EUROPEAN PATENT APPLICATION

(11) **EP 4 020 944 A1**
(43) Date of publication of application: **29.06.2022**
(21) Application number: 20859211.3
(22) Date of filing: 24.08.2020
(51) Int. Cl.: H04M 1/02, H04N 5/225

(54) **CAMERA MODULE AND ELECTRONIC DEVICE**

(30) Priority: 28.08.2019 CN 201910804610
(71) Applicant: GUANGDONG OPPO MOBILE TELECOMMUNICATIONS CORP., LTD., Dongguan, Guangdong 523860 (CN)
(72) Inventor: LI, Zhen, Dongguan, Guangdong 523860 (CN); WEN, Quanhao, Dongguan, Guangdong 523860 (CN)
(74) Representative: Manitz Finsterwald Patent- und Rechtsanwaltspartnerschaft mbB
(86) International application number: PCT/CN2020/110871
(87) International publication number: WO 2021/037003

(57) **Abstract**

The present application relates to the technical field of communications, and especially relates to a camera module and electronic device. The camera module comprises: a camera support and a camera, the camera support being connected to the camera and the camera support fixing the camera. The camera support comprises: a base material; the base material comprising an outer surface which is provided with a pattern layer, and a through-hole that penetrates the outer surface is provided on the base material, the camera being provided opposite the through-hole. By using the described method, the present application may reduce the fabrication process, reduce costs, and improve the appearance of the camera module.

## Description

### TECHNICAL FIELD

The described embodiments relate to the field of communication technology, and more specifically, to a camera module and an electronic device.

### BACKGROUND

With the development of communication technology, electronic devices such as smart phones are becoming more and more popular. With the improvement of consumption level, consumers not only pursue diversification of functions of electronic products, but also have higher and higher requirements for appearances and textures of the electronic products.

### SUMMARY

A camera module and an electronic device are provided in some embodiments of the present disclosure, which may reduce production processes, reduce cost, and further improve an appearance of the camera module.

In one aspect of the present disclosure, an electronic device may be disclosed. The electronic device may include a housing assembly and a camera module. The housing assembly comprises a housing body, and the housing body comprises a light-transmitting portion. The camera module comprises: one or more cameras; and a camera support, connected to the one or more cameras, configured to fix the one or more cameras, and comprising a base, wherein the base has an outer surface, a pattern layer is arranged on the outer surface, one or more through-holes extending through the outer surface is defined in the base, and the one or more cameras are disposed correspondingly to the through-hole. The camera module is mounted in the housing assembly, at least a part of the light-transmitting portion covers on the camera module, the light-transmitting portion is made of light-transmitting material, and the pattern layer is visible from the light-transmitting portion.

In another aspect of the present disclosure, a camera module may be disclosed. The camera module may include one or more cameras; and a camera support, connected to the camera, configured to fix the camera, and comprising a base. The base has an outer surface, a pattern layer is arranged on the outer surface, and one or more through-holes extending through the outer surface are defined in the base. The one or more cameras are disposed correspondingly to the one or more cameras through-holes.

In another aspect of the present disclosure, an electronic device may be disclosed. The electronic device may include a housing assembly, comprising a housing body, and the housing body comprising a light-transmitting portion; and the camera module as previously described. The camera module is mounted in the housing assembly, and at least a part of the light-transmitting portion covers on the camera module.

The technical effects of some embodiments of the present disclosure may be as follow. Compared with the related art, the camera module in some embodiments may include the camera support and the camera. The camera support may include the base. The through-hole extending through the outer surface may be further defined in the base 110. The pattern layer may be arranged on the outer surface of the base. A user may observe or see the pattern layer from an outer side of the camera module. Therefore, in some embodiments of the present disclosure, it is possible to omit the process of coating ink on the decorative cover covering the camera in the related art, thereby reducing production processes and further reducing costs. Besides, it is possible to improve an aesthetic design of the camera module and further improve an appearance of the camera module.

### BRIEF DESCRIPTION OF THE DRAWINGS

In order to explain technical solutions in some embodiments of the present disclosure more clearly, the following will briefly introduce drawings needed in the description of the embodiments. Obviously, the drawings in the following description are only some embodiments of the present disclosure. For those of ordinary skill in the art, other drawings may be acquired based on these drawings without any creative work.
FIG. 1 is a first schematic structural view of a camera module according to some embodiments of the present disclosure.
FIG. 2 is a second schematic structural view of the camera module according to some embodiments of the present disclosure.
FIG. 3 is a third schematic structural view of the camera module according to some embodiments of the present disclosure.
FIG. 4 is an exploded view of an electronic device according to some embodiments of the present disclosure.
FIG. 5 is a first partial view of a housing assembly shown in FIG. 4.
FIG. 6 is a second partial view of the housing assembly shown in FIG. 4.
FIG. 7 is a schematic view of the camera module shown in FIG. 4.
FIG. 8 is a schematic view of an electrochromic layer shown in FIG. 4.
FIG. 9 is a flowchart of an electrochromic method according to some embodiments of the present disclosure.

### DETAILED DESCRIPTION

The technical solutions in some embodiments of the present disclosure will be described clearly and completely in conjunction with the accompanying drawings in the embodiments of the present disclosure. Obviously, the described embodiments are only a part of the embodiments of the present disclosure, rather than all the embodiments. Based on the embodiments in the present disclosure, all other embodiments acquired by those of ordinary skill in the art without any creative work shall fall within the protection scope of the present disclosure.

At present, the consumer electronic industry is developing faster and faster, and various manufacturers are constantly seeking technological and functional innovations to cater to the development trend of environmental protection, energy saving, and differentiation. With the continuous development of mobile products, appearance requirements for camera modules and electronic devices are getting higher and higher.

In some embodiments of the present disclosure, a camera module and an electronic device may be provided. The detailed description will be given below. The camera module may be arranged in the electronic device. The electronic device may be a device such as a smart phone, a tablet computer, or the like.

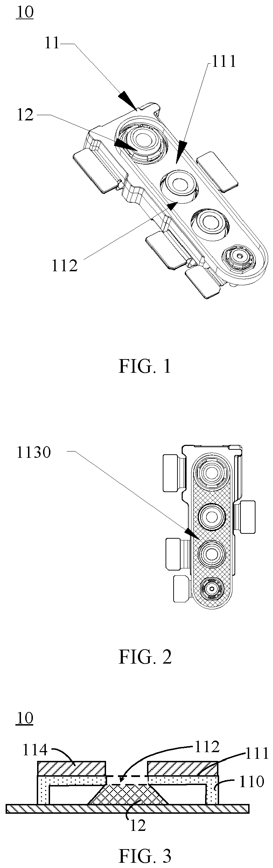

FIG. 1 is a first schematic structural view of a camera module according to some embodiments of the present disclosure, FIG. 2 is a second schematic structural view of the camera module according to some embodiments of the present disclosure, and FIG. 3 is a third schematic structural view of the camera module according to some embodiments of the present disclosure. As shown in FIGS. 1-3, the camera module 10 may include a camera support 11 and a camera 12. The camera support 11 may be connected to the camera 12, and the camera support 11 may be configured to fix or secure the camera 12.

The camera support 11 may include a base 110. The base 110 may include an outer surface 111, and a through-hole 112 extending or penetrating through the outer surface 111 may be further defined in the base 110. A pattern layer 114 may be arranged on the outer surface 111. The camera 12 may be disposed correspondingly to or opposite to the through-hole 112 defined in the camera support 11.

More specifically, the camera 12 may be arranged on the camera support 11. In this way, the camera 12 may be fixed and assembled via the camera support 11. Besides, the camera support 11 may shield and protect the camera 12 and facilitate an integrated design of the camera module 10. The through-hole 112 defined in the base 110 may face towards the camera 12, and the camera support 11 may provide a light-shielding effect. In this way, light may enter the camera 12 only through the through-hole 112, and thus it is possible to meet a requirement of the camera 12 for light which is used for shooting.

The number of the cameras 12 may be one or more, and the number of the through-holes 112 may correspond to the number of the cameras 12 in a one-to-one correspondence. In some embodiments, the number of the through-holes 112 may also correspond to a total number of the cameras 12 and the flashes. In some embodiments, the number of the cameras 12 may be 3, the number of the flashes may be 1, and the number of the through-holes 112 may be 4. A body of the base 110 may provide the light-shielding effect. In this way, light may enter the camera 12 only through the through-hole 112, and thus it is possible to meet the requirement of the camera 12 for the light which is used for shooting.

Furthermore, the number of lenses of the cameras 12 may be at least two, the number of the through-holes 112 may be substantially the same with the number of the lenses of the camera 12, and the lenses of the camera 12 may be disposed correspondingly to the through-holes 112 in a one-to-one correspondence.

In some embodiments, the lenses of the camera 12 may pass or run or extend through the corresponding through-hole 112. A light-incident surface of the lens may be substantially parallel to the pattern layer.

The pattern layer 114 may be configured to decorate the camera module 10. The pattern layer 114 may be arranged in a region at an edge of the through-hole 112. It may be understood that, the pattern layer 114 may be arranged on the entire outer surface 111 of the base 110, or may be arranged in an annular region or a rectangular region at the edge of the through-hole 112, which will not be limited herein.

Compared with the related art, the camera module 10 in some embodiments may include the camera support 11 and the camera 12. The camera support 11 may include the base 110. The through-hole 112 extending through the outer surface 111 may be further defined in the base 110. The pattern layer 114 may be arranged on the outer surface around the through-hole 112. Since a light-transmitting portion 211 is made of light-transmitting material, a user may observe or see the pattern layer 114 from an outer side of the camera module 10. Therefore, in some embodiments of the present disclosure, it is possible to omit the process of coating ink on the decorative cover covering the camera in the related art, thereby reducing production processes and further reducing costs. Besides, it is possible to improve an aesthetic design of the camera module 10 and further improve an appearance of the camera module 10.

In some embodiments, the pattern layer 114 may include a decorative pattern 1130. The decorative pattern 1130 may be arranged or formed on the outer surface 111 by at least one of etching, screen printing, laser engraving, spraying, electroplating, anodizing, or the like.

More specifically, the decorative pattern 1130 may be a text logo. Or, the decorative pattern 1130 may be a pattern mark. Or, the decorative pattern 1130 may be a logo comprising a pattern and a text. The decorative pattern 1130 may be a trademark mark of a product. Or, the decorative pattern 1130 may be a model mark of the product.

The decorative pattern 1130 may be arranged or formed by printing ink on the outer surface 111 by means of such as pad printing, spraying, screen printing, electroplating, or the like. Of course, the forming method of the decorative pattern may not be limited to the above methods, and any other method that may print ink may be used. In some embodiments, it is possible to arrange colored decorative pattern 1130 on the outer surface 111 by means of such as spraying, pad printing, screen printing, or electroplating processes. More specifically, the colored decorative pattern 1130 may be realized by means of pad printing the ink, screen printing the ink, spraying the ink, plating color film, or the like. Of course, other methods may also be used, which is not limited here. Furthermore, it is also possible to choose a highlight ink or a matt ink to achieve the highlight or matt effect of the outer surface 111.

In the laser engraving process, a mold may be ablated or etched at a high temperature instantly with a laser beam according to or based on programmed pattern information, a frequency and a speed of the laser beam may be further adjusted to adjust a depth of the etching to acquire different patterns. The conditions of the laser engraving may be changed in a wide range, as long as a pattern with a depth of 10-400 microns may be engraved on the outer surface 111. In some embodiments, the laser engraving may be performed with the laser beam having a frequency of 3000-6000Hz and a moving speed of 60-320mm/sec.

According to some embodiments of the present disclosure, the etching may be chemical etching and/or anodic etching. The processes and the conditions of the chemical etching are known to those of ordinary skill in the art. For example, the outer surface 111 of the metal camera support may be in contact with a chemical etching solution to perform the etching. The chemical etching solution may be any chemical etching solution conventionally used for the etching of the metal camera support. Taking the metal camera support as a stainless steel workpiece as an example, an acid solution may be used for chemical etching. The acid solution may be a hydrochloric acid solution with a concentration of 4.5-15 g/L. The etching may be performed at a temperature of 45-50°C, and the etching time may be determined based on a specific depth of the desired pattern.

In the anodizing process, after removing the ink, a surface from which the ink has been removed may be anodized, and thus an oxide film protective layer may be acquired. Aluminum material may be used as an anode in an anodization bath and connected to a cathode of an oxidation power supply, and a cathode of the anodization bath may be connected to an anode of the oxidation power supply. Electric current may be applied and pass under an external power supply to maintain electrochemical reaction. Anodizing of aluminum is a process of electrolytic oxidation, during which a surface of the aluminum is transformed or turned into a layer of oxide film. The anodized film is transparent, porous, and has strong adsorption performance. It is easy to dye or cover the sealing layer. The anodized film has protective, decorative, and other functions.

In other embodiments, the decorative pattern 1130 may also be arranged or formed by other surface treatment processes or by pasting a decorative sheet on the outer surface 111.

In some embodiments, the pattern layer 114 may include at least one of a texture sublayer, a plating sublayer, and an ink sublayer.

The texture sublayer may be arranged or formed on the outer surface 111 by printing UV (ultraviolet) glue.

More specifically, the UV glue may be coated on a UV transfer mold, the base 110 may be put into the UV transfer mold and pressed, such that the UV glue may be adhered to the outer surface 111. Then, the base 110 may be put into a UV oven and cured, such that the texture sublayer may be arranged or formed on the outer surface 111 of the base 110. In order to make the UV glue be fully adhered to the base 110, the UV glue is defoamed before pressing. After the pressing is completed, the base 110 may be placed at room temperature for 3-5 minutes, such that the UV glue may be fully adhered to the base 110. In some embodiments, an energy of the UV oven may be set in a range of 800~1000mj/cm³, and a temperature of the UV oven does not exceed 80°C. In this way, it is possible to reduce the risk of deformation of the base 110 due to the high temperature, and the appearance of the film may be guaranteed. In some embodiments, the types of the UV texture may be a CD (compact disc) texture, a beam texture, a water-wave texture, or the like.

The plating sublayer may be arranged or formed on the outer surface 111 by vapor depositing metal.

More specifically, metal may be deposited on the outer surface 111 of the base 110 by an optical vacuum deposition method to prepare a discontinuous metal texture film.

The ink sublayer may be arranged or formed on the outer surface 111 by printing ink.

More specifically, the printing of the ink sublayer may be performed by offset printing, screen printing, or inkjet printing.

In some embodiments, the aforementioned camera support 11 may be at least one of a metal plate, a plastic plate, or a composite plate of metal and plastic.

In some embodiments, the material of the metal plate may be at least one of aluminum, aluminum alloy, or stainless steel.

More specifically, an exposed region of the camera 12 and the camera support 11 may be used as an appearance surface. The camera support 11 may be made of plastic, aluminum alloy, stainless steel, or the like. The camera support 11 may be processed or made by means of injection molding, CNC machining, powder metallurgy, or the like. In case the base 110 is made of aluminum or aluminum alloy, an anodic oxide layer may be arranged on the outer surface 111 of the base 110, such that an L value in the Lab color model L which corresponds to the outer surface 111 of the base 110 may drop to a value of 20-30. That is, the pattern layer 114 may be black. When the electronic device is black, the appearance expressiveness of the base 110 may be effectively improved to meet the requirements of the user for the appearance of the electronic device.

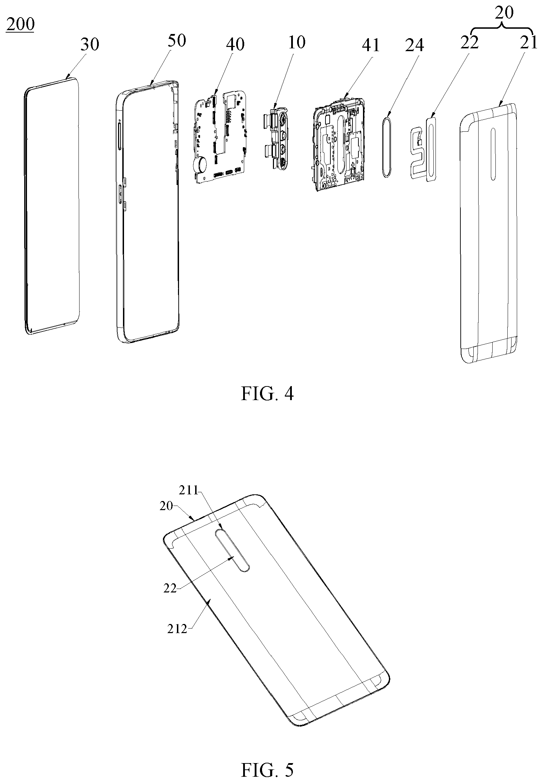

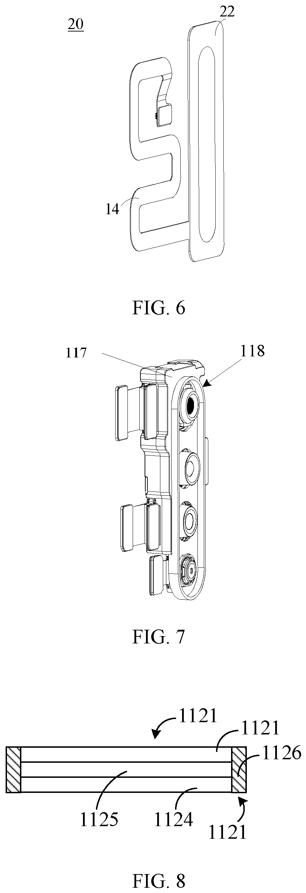

FIG. 4 is an exploded view of the electronic device according to some embodiments of the present disclosure, FIG. 5 is a first partial view of a housing assembly shown in FIG. 4, FIG. 6 is a second partial view of the housing assembly shown in FIG. 4, FIG. 7 is a schematic view of the camera module shown in FIG. 4, and FIG. 8 is a schematic view of an electrochromic layer shown in FIG. 4. As shown in FIGS. 4-8, the electronic device 200 may be any device with communication and storage functions. For example, the electronic device 200 may be any device having a network function, such as a tablet computer, a mobile phone, an e-reader, a remote control, a personal computer (PC), a notebook computer, an automotive equipment, a network television, a wearable device, or the like.

The electronic device 200 may include a housing assembly 20 and the camera module 10. The housing assembly 20 may include a housing body 21, and the housing body 21 may include a light-transmitting portion 211. The camera module 10 may be the camera module 10 as previously described. The camera module 10 may be disposed correspondingly to or face towards the light-transmitting portion 211. At least a part of the light-transmitting portion 211 may cover the camera module 10. The specific structure of the camera module 10 may refer to the above-mentioned embodiments, which will not be repeated here.

In some embodiments, the housing may be a front shell or a rear shell of the electronic device 200. The light-transmitting portion 211 may be used in the front camera 12 of the electronic device 200, or may also be used in the rear camera 12 of the electronic device 200.

For example, the housing body 21 may be the rear shell of the electronic device 200, and the housing body 21 may be configured to form an outer contour of the electronic device 200. The housing body 21 may be formed in one piece. During the manufacturing process of the rear shell, other structures such as a mounting hole for the rear camera, a mounting hole for a fingerprint recognition module, and the like, may be defined on the rear shell.

The material of the housing body 21 may be metal, such as aluminum, aluminum alloy, stainless steel, or the like. It should be noted that, in some embodiments of the present disclosure, the material of the housing body 21 is not limited to this. The housing body 21 may also be made of other materials. For example, the housing body 21 may be a plastic rear shell. Or, for another example, the housing body 21 may be a ceramic rear shell.

The light-transmitting portion 211 may be made of light-transmitting material, and the user may observe or see the pattern layer 114 through the light-transmitting portion 211. Therefore, in some embodiments of the present disclosure, it is possible to omit the process of coating ink on the decorative cover covering the camera in the related art, thereby improving an aesthetic design of the whole electronic device. The light-transmitting portion 211 may be transparent, and the light may enter the camera 12 through the light-transmitting portion 211.

The light-transmitting portion 211 has a light-incident surface. When the user looks at or views the housing body 21 of the electronic device 200, the light-incident surface is a surface of the light-transmitting portion 211 facing towards the user. The camera module 10 may be located at one side of the housing body 21 facing away from the light-incident surface. Ambient light may pass through the light-incident surface of the light-transmitting portion 211, and enter the camera module 10 through the light-transmitting hole, such that a photosensitive element of the camera module 10 may receive the ambient light and form an image. The light-transmitting portion 211 may have a higher light transmittance and a higher hardness. In this way, it is possible protect the light-incident surface from being easily scratched, and may have a better protection to the optical lens of the camera module 10.

A thickness of the light-transmitting portion 211 may increase a strength of the light-transmitting portion 211 and reduce the risk of being broken due to an external impact. The thickness of the light-transmitting portion 211 may be in a range of 0.2mm to 1mm, for example, 0.2mm, 0.3mm, 0.4mm, 0.5mm, 0.6mm, 0.7mm, 0.8mm, 0.9mm or 1.0mm. In some embodiments, the thickness of the light-transmitting portion 211 may be 0.5 mm. Glass having a thickness of 0.5 mm will not make the entire decorative component appear thick, besides, the glass having the thickness of 0.5 mm may also be resistant to the external impact.

It is understandable that, the light-transmitting portion 211 may be used as a decorative cover of the camera. The light-transmitting portion 211 may be implemented as a convex glass cover, an anti-fog glass cover, a light-enhancing glass cover, an infrared cut filter glass cover, a sapphire cover, or other cover with unique functions. In addition, other cover with unique functions may also be configured as the light-transmitting portion 211 to acquire different photographing effects, which will not be described here.

The material of the light-transmitting portion 211 may be glass or sapphire. In some embodiments, the glass has a low cost and simple manufacturing processes, and is easy to produce, such that the production cost of the light-transmitting portion 211 may be reduced. The main component of the sapphire is aluminum oxide from which impurities such as iron oxide, titanium oxide, or the like, have been removed. The sapphire has a great hardness and is not easy to reflect and scratch, which may facilitate the light transmission of the light-transmitting portion 211.

Compared with the related art, in some embodiments, the electronic device 200 may include the housing assembly 20 and the camera module 10. The housing body 21 may include the light-transmitting portion 211, and at least a part of the light-transmitting portion 211 may cover the camera module 10. The user may observe the pattern layer from the outer side of the light-transmitting portion 211. Therefore, in some embodiments of the present disclosure, it is possible to omit the process of coating ink on the decorative cover covering the camera in the related art, thereby reducing the production process and further reducing costs. Besides, it is possible to improve an aesthetic design of the camera module 10, and further improve an aesthetic effect of the camera module 10.

Furthermore, the housing body 21 may further include a non-transmitting portion 212 located at a periphery of the light-transmitting portion 211.

In some embodiments, the housing assembly 20 may further include a decorative ring 25. The decorative ring 25 may be connected to the light-transmitting portion 211 and the non-transmitting portion 212. The decorative ring 25 may be configured to fix the light-transmitting portion 211.

More specifically, the non-transmitting portion 212 may define a mounting hole. In case the mounting hole 213 is a through-hole, during the assembly of the electronic device 200, it is possible firstly insert the decorative ring 25 into mounting hole 213 from a lower side of the non-transmitting portion 212. Then, glue is dispensed into a gap between an inner wall of the mounting hole 213 and the decorative ring 25 to make the decorative ring 25 be fixedly connected to the non-transmitting portion 212. After that, the light-transmitting portion 211 may be mounted into the decorative ring 25 from an upper side of the non-transmitting portion 212, and the light-transmitting portion 211 may be further fixedly connected to the decorative ring 25 by using glue. In case the mounting hole 213 is a blind hole, it is possible to insert the light-transmitting portion 211 into the decorative ring 25, and then the decorative ring 25 with the light-transmitting portion 211 inserted therein may be inserted into the mounting hole 213. The decorative ring 25 may be fixedly adhered to the non-transparent portion 212 by using the glue.

In some embodiments, the light-transmitting portion 211 and the non-transmitting portion 212 of the camera module 10 may be an integral structure.

In some embodiments, if the light-transmitting portion 211, the non-transmitting portion 212, and the decorative ring 25 are independent components separated from each other, it needs to separately manufacture the light-transmitting portion 211, the non-transmitting portion 212, and the decorative ring 25, such that the manufacturing cost increases. Besides, the light-transmitting portion 211, the non-transmitting portion 212, and the decorative ring 25 need to be attached separately, and the assembly process is complicated. In addition, if the light-transmitting portion 211 is not firmly adhered to the decorative ring 25, the light-transmitting portion 211 may fall off the decorative ring 25.

Accordingly, in some embodiments of the present disclosure, the light-transmitting portion 211 may be integrated with the light-transmitting portion 211, and thus, it is unnecessary to arrange a separate light-transmitting portion 211 and the decorative ring configured to fix the light-transmitting portion 211. In this way, it is possible to effectively reduce the gap existing between the light-transmitting portion 211 and the decorative ring 25 and the gap existing between the decorative ring 25 and the nontransmissive portion 212. Therefore, it is possible to reduce the impact on the image due to external light entering into the camera 12 from the gaps. Besides, it is also possible to reduce the occurrence that dust and impurities fall into the camera module 10 from the gaps, and the image quality may be improved.

The housing assembly 20 may include an electrochromic layer 22. The electrochromic layer 22 may be disposed at a side of the light-transmitting portion 211 facing away from the camera module 10. The electrochromic layer 22 at least partially covers the light-transmitting portion 211.

More specifically, according to some embodiments of the present disclosure, the electrochromic layer 22 may be arranged or formed on the light-transmitting portion 211 by printing or spraying. Therefore, the producing process of the electrochromic layer 22 is simple and easy to operate.

For example, the electrochromic layer 22 may be an electrochromic ink layer. Therefore, it is convenient to arrange the electrochromic layer 22 on the light-transmitting portion 211 by printing or spraying.

According to some embodiments of the present disclosure, the electrochromic layer 22 may be an electrochromic film or an electrochromic plate. As a result, the production and manufacture of the electrochromic layer 22 may be carried out separately, and a mass production of the electrochromic layer 22 may be realized. The produced electrochromic film or electrochromic plate may be directly attached to the light-transmitting portion 211. In some embodiments, the electrochromic layer 22 may be attached to the light-transmitting portion 211 via glue.

According to some embodiments of the present disclosure, in case the electrochromic layer 22 is an electrochromic film or an electrochromic plate, the electrochromic layer 22 may include a transparent substrate and an electrochromic material distributed in the substrate. Thus, it is possible to facilitate the production and processing of the electrochromic layer 22. In some embodiments, the base 110 may be a resin component.

The electrochromic layer 22 may be adapted to be switched between a first light-transmitting state and a second light-transmitting state. It should be noted that, the light transmitting through the electrochromic layer 22 when the electrochromic layer 22 is in the first light-transmitting state is different from the light transmitting through the electrochromic layer 22 when the electrochromic layer 22 is in the second light-transmitting state, such that the electrochromic layer 22 may have different appearance effects. For example, when the electrochromic layer 22 is in the first light-transmitting state, the electrochromic layer 22 may be in a transparent state. At this time, all the light may be transmitted through the light-transmitting portion 211, and the camera module 10 may perform normal photography. When the electrochromic layer 22 is in the second light-transmitting state, the electrochromic layer 22 may be presented in red, blue, gray, white, or the like, such that the light-transmitting portion 211 may match with or be adapted to the non-transmitting portion 212 of the housing body 21. In this way, it is possible to improve the appearance and expressiveness of the electronic device 200.

In some embodiments, the electrochromic layer 22 may include a visible region 1121 and an invisible region 1122. The visible region 1121 is arranged to be opposite to or face towards the lens of the camera module 10. The invisible region 1122 may be disposed or arranged around or on a periphery of the visible region 1121.

More specifically, the electrochromic layer 22 may include a first electrode layer 1123, an electrochromic functional layer 1125, a second electrode layer 1124, and a wire 1126. In some embodiments, the electrochromic functional layer 1125 may be disposed between the first electrode layer 1123 and the second electrode layer 1124. The wire 1126 may be connected to the first electrode layer 1123 and the second electrode layer 1124. The wire 1126 may be located at two opposite sides of the electrochromic layer 22, respectively. The wire 1126 may be configured to apply a voltage to the first electrode layer 1123 and the second electrode layer 1124, in order to generate an electric field that may cause a change of a color of the electrochromic functional layer 1125.

The first electrode layer 1123 and the second electrode layer 1124 may both be formed of transparent conductive materials. In this way, the color produced by the electrochromic functional layer 1125 may appear from any side of the electrochromic layer 22. According to some embodiments of the present disclosure, the first electrode layer 1123 and the second electrode layer 1124 may be both made of indium tin oxide. The electrochromic functional layer 1125 may be made of or even composed of at least one of inorganic electrochromic material, organic micromolecule electrochromic material, and organic polymer. Therefore, the electrochromic layer 22 may be made of a plurality of materials, and the electrochromic layer 22 has a wider source of materials. According to some embodiments, the inorganic electrochromic material may be transition-metal oxide, Prussian blue, or the like. The organic micromolecule electrochromic material may be viologen. The organic polymer may be polyaniline, polythiophene, or the like.

That is, in some embodiments, the wire 1126 may be arranged at edges of the first electrode layer 1123 and the second electrode layer 1124. The wire 1126 may be configured to be electrically connected to a flexible circuit board 14. The first electrode layer 1123 and the second electrode layer 1124 may be connected to an external control circuit via the wire 1126 and the flexible circuit board 14. In some embodiments, the first electrode layer 1123, the electrochromic functional layer 1125, and the second electrode layer 1124 are all transparent components, that is, the first electrode layer 1123, the electrochromic functional layer 1125, and the second electrode layer 1124 may define or constitute the visible region 1121. The wire 1126 is not visible in appearance, that is, the wire 1126 may define or form the invisible region 1122, such that the appearance of a wiring region of the electrochromic layer 22 will not be affected. In some embodiments, the wiring of the electrochromic layer 22 has simple wiring, small footprint, high reliability, and the like, and meets application requirements of the electronic device 200.

In some embodiments, the number of the wires 1126 may be configured based on the number of color-changing regions of the electrochromic layer 22, in order to independently control a plurality color-changing regions of the electrochromic layer 22, such that colors of the plurality color-changing regions of the electrochromic layer 22 may be changed independently.

That is, a plurality of wires 1126 may be arranged at the edges of the first electrode layer 1123 and the second electrode layer 1124, respectively. The plurality of wires 1126 may be configured to apply voltages to a plurality of regions of the first electrode layer 1123 and a plurality of regions of the second electrode layer 1124, such that a plurality of electric fields that may change the colors of the electrochromic layer 22 may be generated. In this way, the color of the electrochromic layer 22 may be changed completely in the whole region, or in a partial region, or colors of a plurality of regions of the electrochromic layer 22 may be changed independently, such that the electrochromic layer 22 may have a colorful appearance.

In some embodiments, the housing assembly 20 may further include the flexible circuit board 14, and the plurality of wires 1126 are all connected to the flexible circuit board 14. In some embodiments, a length of the electrochromic layer 22 in a length direction may be greater than or substantially equal to a length of the electrochromic layer 22 in a width direction, and the flexible circuit board 14 may extend along the length direction.

More specifically, a binding width of the flexible circuit board 14 may be generally 0.4-0.6mm (for example: 0.4mm, 0.5mm, or 0.6mm). Furthermore, it is also necessary to reserve or define a clearance gap of 0.2mm at both sides of the flexible circuit board 14. Thus, in case that the flexible circuit board 14 extends in the width direction, a width of the housing assembly 20 needs to be increased by 0.8-1.2mm (for example: 0.8mm, 0.9mm, 1.0mm, 1.1mm or 1.2mm).

According to some embodiments of the present disclosure, the flexible circuit board 14 may be bendable. Therefore, by using the wire 1126 to lead out from the electrode layers and further electrically connecting the wire 1126 to the flexible circuit board 14, a border of the electrochromic layer 22 may be narrower, and only a contact between the flexible circuit board 14 and the wire 1126 needs to be reserved. On one hand, a transparency of the flexible circuit board 14 is greater than that of a copper sheet. Therefore, the contact between the flexible circuit board 14 and the wire 1126 may be more transparent, that is, the part of the border observed from the upper surface of the electrochromic layer 22 may be more transparent. On the other hand, the flexible circuit board 14 is flexible. Compared with the copper sheet, the flexible circuit board 14 may be bent to a rear of the electrochromic layer 22 except for the contact with the wire 1126. Therefore, the border of the electrochromic layer 22 may be narrower.

According to some embodiments of the present disclosure, the electrochromic layer 22 may include a plurality of wires 1126, and the plurality of wires 1126 may be connected to the same flexible circuit board 14. Thus, colors of a plurality of regions of the electrode layers may be changed independently from each other. That is, only one flexible circuit board 14 is needed for all the electrode layers, and a plurality of separate connection points may be arranged on the flexible circuit board 14. The connection points may be connected to the wires 1126 corresponding to the plurality of regions in the electrode layers. In this way, the plurality of regions may be controlled separately, space may be saved, and the colors of the plurality of regions may be changed independently from each other. However, in case of using the copper sheets to connect to the electrode layers, if the colors of the plurality of regions are needed to be independently changed, a plurality of copper sheets need to be arranged and led out from the electrode layers. As previously stated, one copper sheet already occupies a lot of space. Thus, if it needs to change the colors of the plurality of regions independently from each other, much more space will be inevitably occupied, and it is inconvenient to independently change the colors of the plurality of regions. In this way, the electrochromic layer 22 may only present a single color. Therefore, compared with the electrochromic layer in the case using the copper sheets, the electrochromic layer 22 according to some embodiments of the present disclosure may have a simpler wiring, a smaller footprint, and a narrower border, and may realize independent changing of the colors in the plurality of regions, which may meet the requirements of the user for a colorful appearance. Besides, the plurality of wires 1126 and a plurality of control circuits may be connected to the same flexible circuit board 14, which occupies a small space, and may realize separate control of the plurality of regions, thus, this solution may be applied to the electronic device 200 and beautify the appearance of the electronic device 200, and the requirements of the user for the colorful appearance may be satisfied.

In some embodiments, the electronic device 200 may further include a display module or display screen 30, a main board 40, and a bracket 41 for the main board 40. The display module 30 may be connected to the housing body 21, and the display module 30 and the housing body 21 cooperatively define a receiving space. The camera module 10, the main board 40, and the bracket 41 may be disposed in the receiving space. The main board 40 may be arranged on or mounted on the bracket 41.

The main board 40 may be electrically connected to the electrochromic layer 22. The main board 40 may be configured to control to change a light transmittance of the electrochromic layer 22 to hide or display the camera module 10.

More specifically, the flexible circuit board 14 may be electrically connected to the plurality of wires 1126 via a conductive adhesive. The flexible circuit board 14 may also be electrically connected to the main board 40. Different control circuits in the main board 40 may control different wires 1126, such that the plurality of regions in the electrochromic layer 22 may be controlled independently from each other, and thus the colors of the plurality of regions in the electrochromic layer 22 may be change independently from each other.

Furthermore, the main board 40 may be further also electrically connected to the display module 30.

The display module 30 may include a touch screen and a cover. The touch screen may be configured to display information such as images and texts. The touch screen may be a display such as a liquid crystal display (LCD), an organic light-emitting diode (OLED) display, or the like. More specifically, the touch screen may also be a flexible organic light-emitting diode (FOLED) display. The FOLED display is a display device made on flexible plastic or metal film using organic electroluminescence display technology. The FOLED display has a light weight and a small size, and is flexible and bendable, and is an overall development direction of the display screens of the current portable device.

The display module 30 may be configured to receive input instructions. The electronic device 200 may store a plurality of input instructions. The input instructions may be loadable by the main board 40 to control to change the light transmittance of the electrochromic layer 22 to hide or display the camera module 10.

In some embodiments, the housing assembly 20 may further include an optical adhesive layer 23 disposed between the light-transmitting portion 211 and the electrochromic layer 22, and the optical adhesive layer 23 is configured to connect the light-transmitting portion 211 to the electrochromic layer 22.

The optical adhesive layer 23 may be disposed at one side of the first electrode layer 1123 facing away from the electrochromic functional layer 1125, or disposed at one side of the second electrode layer 1124 facing away from the electrochromic functional layer 1125. The electrochromic layer 22 may be attached to the light-transmitting portion 211 through the optical adhesive layer 23. The specific type of the optical adhesive layer 23 is not limited herein, as long as the optical adhesive layer 23 is transparent and may bond the electrochromic component and the decorative cover together. For example, the optical adhesive layer 23 may be an OCA (Optical Clear Adhesive) optical adhesive.

In some embodiments, the electronic device 200 may further include a sealing member 24. The sealing member 24 may be disposed between the camera module 10 and the housing body 21.

Furthermore, the camera support 11 may include a support body 117 and a support boss or protrusion 118 protruding from the support body 117. The sealing member 24 may be sleeved on an outer periphery of the support boss 118 to seal a gap between the support boss 118 and the housing body 21.

More specifically, the sealing member 24 is sleeved on the outer periphery of the support boss 118, to seal a gap between the support boss 118 and an inner surface of the housing body 21. With this design, the sealing member 24 may provide the camera module 10 with buffer protection in the X direction and the Y axis direction, thereby improving a stability of the camera module 10. A shape of the sealing member 24 may also be changed according to the appearance of different products.

In some embodiments, when the housing body 21 is assembled with the camera module 10 of the electronic device 200, the sealing member 24 sleeved on the outer periphery of the support boss 118 is pressed by the housing body 21, thereby sealing the gap between the housing body 21 of the electronic device 200 and the camera module 10. The sealing member 24 may reduce the occurrence that external water vapor, dust, or the like, enters the camera 12 through the gap between the housing body 21 and the camera module 10, such that the electronic device 200 equipped with the housing body 21 has a good sealing effect, and the electronic device 200 has a high reliability.

It may be understood that, the sealing member 24 may be a sealing ring. The sealing member 24 may be tightly sleeved on an outer side of the support boss 118 without a gap existing between the sealing member 24 and the outer peripheral surface of the support boss 118. When the seal 24 is pressed by the housing body 21, a size of the sealing member 24 in a direction substantially parallel to the outer peripheral surface of the support boss 118 may be compressed, and a size of the sealing member 24 in a direction substantially perpendicular to the outer peripheral surface of the support boss 118 may be increased, in order to better seal the gap between the housing body 21 of the electronic device 200 and the support boss 118. The sealing member 24 may be made of rubber, foam, or the like.

The sealing member 24 described above may be made of at least one material of silica gel, rubber, foam, or viscose. The viscose may be double-sided tape or glue. In this way, the dust-proof sealing performance of the camera module 10 may be ensured.

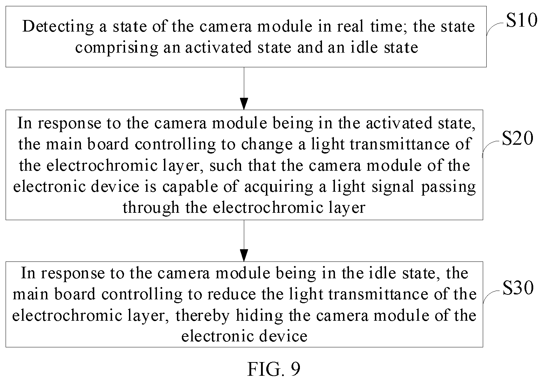

FIG. 9 is a flowchart of an electrochromic method according to some embodiments of the present disclosure. The electrochromic method may be applied to the electronic device 200 in the above-mentioned embodiments. The electronic device 200 may include the electrochromic layer 22, the camera module 10, and the main board 40. As shown in FIG. 9, the method may include operations executed by the following blocks.

At block S10, a state of the camera module 10 may be detected in real time. The state may include an activated state and an idle state.

At block S20, in response to the camera module 10 being in the activated state, the main board 40 controls to change a light transmittance of the electrochromic layer 22, such that the camera module 10 of the electronic device 200 is capable of acquiring a light signal passing through the electrochromic layer 22.

At block S30, in response to the camera module 10 being in the idle state, the main board 40 controls to reduce the light transmittance of the electrochromic layer 22, thereby hiding the camera module 10 of the electronic device 200.

More specifically, the electrochromic layer 22 may be switched between a first state and a second state. In some embodiments, the first state is a non-transparent state or a semi-transparent state, and the second state is a transparent state. The camera 12 may collect an image through the electrochromic layer 22 when the electrochromic layer 22 is in the transparent state. The transparent state referred to here may include a completely transparent state and various semi-transparent states between the completely transparent state and the non-transparent state. More specifically, in the non-transparent state or opaque state, the user can not perceive or see the camera 12 with naked eyes through the rear shell, that is, the camera 12 may be completely hided. In the semi-transparent or translucent state, the user may see an outline of the camera 12 with the naked eyes through the rear shell, that is, at least a part of the camera 12 may be hided. In the completely transparent state or full light-transmitting state, the user may see the outline and specific structural details of the camera 12 through the rear shell.

Several working states of the electronic device 200 may be set forth as follows. The states of the electronic device 200 may be explained with the help of a principle of the electrochromic layer 22. (1) In one case, the camera 12 may start to work at first, that is, the camera 12 is in a shooting state, and then the color of the electrochromic layer 22 starts to change, such that the electrochromic layer 22 may be switched from a blocking state (that is, the non-transparent state) to the transparent state; when the camera 12 finishes the shooting, the camera 12 may be turned off, and the color of the electrochromic layer 22 may start to change reversely, such that the electrochromic layer 22 may be switched from the transparent state to the blocking state. (2) In another case, the color of the electrochromic layer 22 may start to change, such that the electrochromic layer 22 may be switched from the blocking state (that is, the non-transparent state) to the transparent state at first. When the electrochromic layer 22 is completely switched to the transparent state, the camera 12 starts to work and the shooting may be performed. After the shooting is finished, the camera 12 may be turned off, and the color of the electrochromic layer 22 may start to change reversely, such that the electrochromic layer 22 may be switched from the transparent state to the blocking state, so as to hide the camera 12. It should be noted that in the above two working states, after the camera 12 finishes shooting, the two processes of turning off the camera 12 and starting reversely changing the color of the electrochromic layer 22 may be performed at the same time, or either process may be performed first, which may not be specifically limited.

Furthermore, the electrochromic layer 22 may have two states, the blocking state and the non-blocking state. The blocking state may also be called as the default state. The non-blocking state may also be called as an operating state. In some embodiments, the blocking state may be an energized state of the electrochromic layer 22, that is, when the electrochromic layer 22 is switched from the blocking state to the non-blocking state, the energization of the electrochromic layer 22 is stopped, or a reverse voltage may be applied to the electrochromic layer 22. In some embodiments, the reverse voltage is applied to speed up the changing speed of the color. When the electrochromic layer 22 is switched from the non-blocking state to the blocking state, the electrochromic layer 22 may be energized. In addition, the blocking state of the electrochromic layer 22 may also be a nonenergized state, that is, when the electrochromic layer 22 is switched from the blocking state to the non-blocking state, the electrochromic layer 22 may be energized; and while the electrochromic layer 22 is switched from the non-blocking state to the blocking state, the energization of the electrochromic layer 22 is stopped, or a reverse voltage may be applied to the electrochromic layer 22 to speed up the changing speed of the color.

The above are only some embodiments of the present disclosure, and do not limit the scope of the present disclosure. Any equivalent structure or equivalent process transformation made using the content of the specification and drawings of the present disclosure, or directly or indirectly applied to other related technical fields, is also included in the scope of protection of the present disclosure.

## Claims

1. An electronic device, comprising:
a housing assembly, comprising a housing body, and the housing body comprising a light-transmitting portion; and
a camera module, comprising:
one or more cameras; and
a camera support, connected to the one or more cameras, configured to fix the one or more cameras, and comprising a base, wherein the base has an outer surface, a pattern layer is arranged on the outer surface, one or more through-holes extending through the outer surface is defined in the base, and the one or more cameras are disposed correspondingly to the through-hole;
wherein the camera module is mounted in the housing assembly, at least a part of the light-transmitting portion covers on the camera module, the light-transmitting portion is made of light-transmitting material, and the pattern layer is visible from the light-transmitting portion.

2. A camera module, comprising:
one or more cameras; and
a camera support, connected to the one or more cameras, configured to fix the one or more cameras, and comprising a base, wherein the base has an outer surface, a pattern layer is arranged on the outer surface, and one or more through-holes extending through the outer surface are defined in the base;
wherein the one or more cameras are disposed correspondingly to the one or more cameras through-holes.

3. The camera module as claimed in claim 1, wherein the pattern layer comprises a decorative pattern, and the decorative pattern is arranged on the outer surface by at least one of etching, screen printing, laser engraving, spraying, electroplating, and anodizing.

4. The camera module as claimed in claim 1, wherein the pattern layer comprises at least one of a texture sublayer, a plating sublayer, and an ink sublayer.

5. The camera module as claimed in claim 3, wherein
the texture sublayer is arranged on the outer surface by printing ultraviolet glue;
the plating sublayer is arranged on the outer surface by vapor deposition of metal; and
the ink sublayer is arranged on the outer surface by printing ink.

6. The camera module as claimed in claim 1, wherein the number of the cameras is two, the number of the through-holes is two, and lenses of the cameras correspond to the through-holes in a one-to-one correspondence.

7. The camera module as claimed in claim 5, wherein the lenses of the one or more cameras extend through the one or more through-holes, and a light-incident surface of each of the lenses is substantially parallel to the pattern layer.

8. An electronic device, comprising:
a housing assembly, comprising a housing body, and the housing body comprising a light-transmitting portion; and
the camera module as claimed in any one of claims 2-7; wherein the camera module is mounted in the housing assembly, and at least a part of the light-transmitting portion covers on the camera module.

9. The electronic device as claimed in claim 8, wherein the housing body further comprises a non-transmitting portion located at a periphery of the light-transmitting portion.

10. The electronic device as claimed in claim 9, wherein the housing assembly further comprises a decorative ring connected the light-transmitting portion to the non-transmitting portion, and the decorative ring is configured to fix the light-transmitting portion.

11. The electronic device as claimed in claim 9, wherein the light-transmitting portion is integrated with the non-transmitting portion.

12. The electronic device as claimed in claim 8, wherein the housing assembly further comprises an electrochromic layer, the electrochromic layer is disposed at a side of the light-transmitting portion facing away from the camera module, and the electrochromic layer at least partially covers on the light-transmitting portion.

13. The electronic device as claimed in claim 12, wherein the electrochromic layer comprises a transparent substrate and electrochromic material distributed in the substrate.

14. The electronic device as claimed in claim 12, wherein the electrochromic layer comprises:
a first electrode layer;
a second electrode layer;
an electrochromic functional layer, disposed between the first electrode layer and the second electrode layer; and
one or more wires, connected to the first electrode layer and the second electrode layer, located at opposite sides of the electrochromic layer, and configured to apply a voltage to the first electrode layer and the second electrode layer and generate an electric field that causes a change of a color of the electrochromic functional layer.

15. The electronic device as claimed in claim 12, further comprising:
a display module, connected to the housing body, wherein the display module and the housing body cooperatively define a receiving space; and
a main board, disposed in the receiving space, electrically connected to the electrochromic layer, and configured to control a change of a light transmittance of the electrochromic layer and control the electrochromic layer to hide or display the camera module.

16. The electronic device as claimed in claim 15, wherein the main board is electrically connected to the display module, the display module is configured to receive input instructions, and the main board is configured to control the change of the light transmittance of the electrochromic layer based on the input instructions to hide or display the camera module.

17. The electronic device as claimed in claim 16, wherein the housing assembly further comprises an optical adhesive layer disposed between the light-transmitting portion and the electrochromic layer and configured to connect the light-transmitting portion to the electrochromic layer.

18. The electronic device as claimed in claim 8, further comprising:
a sealing member, disposed between the camera module and the housing body.

19. The electronic device as claimed in claim 18, wherein the camera support of the camera module further comprises:
a support body; and
a support boss, protruding from the support body, wherein the sealing member is sleeved on an outer periphery of the support boss and configured to seal a gap between the support boss and the housing body.
